# EUROPÄISCHE PATENTANMELDUNG

(11) **EP 2 674 811 A2**
(43) Veröffentlichungstag der Anmeldung: **18.12.2013**
(21) Anmeldenummer: 13170777.0
(22) Anmeldetag: 06.06.2013
(51) Int. Cl.: G03B 17/48, G02B 21/36, G02B 15/12, G02B 17/02

(54) **Objektiv für ein Bildaufzeichnungsgerät**

(30) Priorität: 11.06.2012 AT 6692012
(71) Anmelder: SWAROVSKI OPTIK KG, 6067 Absam (AT)
(72) Erfinder: Bagusat, Verena Annina, 07745 Jena (DE); Taylor, Clayton, Corpus Christi, TX Texas 78410 (US)
(74) Vertreter: Burger, Hannes

(57) **Zusammenfassung**

Die Erfindung betrifft ein Objektiv (1) für ein Bildaufzeichnungsgerät (2) zur Abbildung eines Bildes (3), welches durch ein fernoptisches Gerät (4) erzeugt wird. Dabei weist ein Gehäuse (6), welches mit einem Okular (7) des fernoptischen Gerätes (4) lösbar verbindbar ist, einen größeren Innendurchmesser (8) auf, als der Außendurchmesser (9) eines Okulargehäuses (10). Sowohl eine Austrittspupille (11) des fernoptischen Gerätes (4) und auch eine Eintrittspupille (12) des Objektivs (1) liegen innerhalb des Gehäuses (6). Das Objektiv (1) weist zumindest eine Linse (13) auf, deren optische Achse (14) parallel zur optischen Achse (15) des Okulars (7) des fernoptischen Gerätes (4) und zur Mittelachse (16) des Okulargehäuses (10) angeordnet ist.

## Beschreibung

Die Erfindung betrifft ein Objektiv für ein Bildaufzeichnungsgerät zur Abbildung ei-nes Bildes, welches durch ein fernoptisches Gerät erzeugt wird, auf einer Bildauf-zeichnungsfläche.

Unter einer fernoptischen Vorrichtung werden in diesem Dokument optische Abbildungssysteme verstanden, welche eine vergrößerte Abbildung über größere Distanzen entfernter Objekte ermöglichen, wie beispielsweise Ferngläser, Teleskope, optische Ziel- und Peilvorrichtungen.

Unter einem Bildaufzeichnungsgerät sind fototechnische Apparaturen, die statische oder bewegte Bilder auf einem fotografischen Film oder über einen Sensor elektronisch aufgezeichnete Signale speichern, zu verstehen, insbesondere konventionelle oder digi-tale Kameras, die über eine Schnittstelle für ein Objektivbajonett verfügen.

Aus der DE 20 005 152 U1 ist ein Adapter zur Verbindung einer Bilderfassungseinrich-tung mit einer optischen Einrichtung, insbesondere Mikroskop, bekannt. Der bekannte Adapter kann auf einer Seite mit einem Objektiv einer Bilderfassungseinrichtung und auf der anderen Seite mit einem Okular einer optischen Einrichtung verbunden werden.

Nachteilig an der bekannten Vorrichtung ist vor allem, dass neben dem Objektiv der Bilderfassungseinrichtung eine zusätzliche Vorrichtung in Form eines Adapters nötig ist, um die Bilderfassungseinrichtung mit der optischen Einrichtung zu verbinden.

Ein weiterer Nachteil der bekannten Vorrichtung liegt darin, dass die Bildqualität selbst bei Verwendung einer weiteren Linse im Adapter leidet, da eine genaue Ausrichtung von drei Linsensystemen auf eine optische Achse mit der optischen Achse der Bilderfassungseinrichtung nötig ist und Abbildungsfehler verstärkt werden.

Aus der US 5,053,794 ist ein Adapter Ring bekannt, der zwischen einem SLR Kamera Gehäuse, SLR Objektiven oder Videokameras und einem optischen Gerät montiert wer-den kann.

Der wesentliche Nachteil dieser bekannten Vorrichtung ist speziell auch darin zu sehen, dass bei der gewählten Anordnung nicht sichergestellt werden kann, dass die Aus-trittspupille der optischen Einrichtung, wie auch die Eintrittspupille des Objektivs in ei-nem Bereich innerhalb des Objektivs zu liegen kommen.

Es ist daher die Aufgabe der Erfindung ein Objektiv bereitzustellen, dass direkt an ein Bildaufzeichnungsgerät angebunden werden kann und welches einfach mit einem fernop-tischen Gerät lösbar verbindbar ist und dennoch sicherstellt, dass die Abbildung eines vom fernoptischen Gerätes erzeugten Bildes auf einer Bildaufzeichnungsfläche des Bildaufzeichnungsgerätes in optimaler Größe und Intensität bzw. Bildhelligkeit erfolgt.

Diese Aufgabe wird dadurch gelöst, dass ein Gehäuse, welches mit einem Okular des fernoptischen Gerätes verbindbar ist, einen größeren Innendurchmesser aufweist als der Außendurchmesser eines Okulargehäuses und sowohl eine Eintrittspupille des fernopti-schen Gerätes und wie auch eine Eintrittspupille des Objektivs innerhalb des Gehäuses liegen und das Objektiv zumindest eine Linse aufweist, deren optische Achse parallel zur optischen Achse des Okulars des fernoptischen Gerätes und zur Mittelachse des Oku-largehäuses angeordnet ist. Die erfindungsgemäße Lösung erlaubt es, ein Bildaufzeich-nungsgerät schnell mit einem fernoptischen Gerät zu verbinden und durch eine integrierte Optik eine qualitativ hochwertige Abbildung des Bildes auf der Bildaufzeichnungsfläche sicherzustellen.

Die Aufgabe kann aber erfindungsgemäß dadurch gelöst werden, dass ein Gehäuse wel-ches mit einem Okular des fernoptischen Gerätes lösbar verbindbar ist, einen größeren Innendurchmesser aufweist als der Außendurchmesser eines Okulargehäuses und zumin-dest ein Schnittpunkt von Schwerstrahlen zumindest von zwei Strahlenbündeln innerhalb des Gehäuses liegt und das Objektiv zumindest eine Linse aufweist, deren optische Achse parallel zur optischen Achse des Okulars des fernoptischen Gerätes und zur Mit-telachse des Okulargehäuses angeordnet ist und der Schnittpunkt auf einer der Bildauf-zeichnungsfläche gegenüberliegenden Seite der der Bildaufzeichnungsfläche nächstlie-genden Linse angeordnet ist.

Eine vorteilhafte Variante der Erfindung besteht darin, dass sowohl die Aus- trittspupille des fernoptischen Gerätes wie auch die Eintrittspupille des Objektivs oder der Schnitt-punkt der Schwerstrahlen von zumindest zwei Strahlenbündeln innerhalb des Gehäuses.in einem Bereich liegt der durch zwei senkrecht zu der optischen Achse verlaufende Ebenen, welche einen Längsabstand bezogen auf die optische Achse von kleiner 5 mm aufweisen, begrenzt ist.

Gemäß einer weiteren Variante kann eine Blende in diesem Bereich der Ebene angeordnet sein.

Gemäß einer weiteren Ausführungsform der Erfindung kann das Objekt eine feste Brennweite kleiner 100 mm, bevorzugt zwischen 40 und 20 mm aufweisen. Dadurch wird eine ausreichend große Abbildung auf der Bildaufzeichnungsfläche sichergestellt.

In einer weiteren besonders günstigen Variante weist das Objektiv eine feste Brennweite von 30 mm auf. Dadurch kann neben der optimalen Abbildungsgröße auch eine kurze Baulänge des Objektivs erzielt werden.

Weiters kann vorgesehen sein, dass das Gehäuse zumindest in einem Überlappungsbe-reich einen größeren Innendurchmesser aufweist als der Außendurchmesser des Oku-largehäuses. Dies gewährleistet eine verbesserte Variabilität zum Einsatz des Objektivs gemeinsam mit mehreren, unterschiedlichen, fernoptischen Geräten und es kann eine verbesserte mechanische Verbindung durch die Überlappung der beiden Vorrichtungen gewährleistet werden.

Eine besonders variable Verbindung des Objektivs mit einem fernoptischen Gerät kann dadurch erzielt werden, dass das Gehäuse über eine mit dem Okulargehäu- se lösbar verbindbare Schnittstelle, mit dem fernoptischen Gerät lösbar verbindbar ist. Dadurch können verschiedene fernoptische Geräte an das Objektiv präzise angebunden werden.

Gemäß einer weiteren Ausführungsform der Erfindung ist das Gehäuse über eine Fixiereinrichtung mit dem fernoptischen Gerät oder der Schnittstelle lösbar verbindbar. Die Fixiervorrichtung kann durch eine Klemm- oder Spannvorrichtung gebildet sein, insbe-sondere durch eine Klemmschraube oder einen Schnellspannverschluss. Dadurch wird sichergestellt, dass eine ausreichend definierte Lagerung und Fixierung des Gehäuses an dem Okulargehäuse oder einer Schnittstelle am Okulargehäuse des fernoptischen Gerätes realisiert werden kann. Eine Ausführungsform des Objektivs sieht vor, dass dieses über ein Objektivbajonett mit dem Bildaufzeichnungsgerät lösbar verbindbar ist. Dadurch kann auch ein schneller Objektivwechsel am Bildaufzeichnungsgerät ermöglicht werden. Zusätzlich stellt die form- und kraftschlüssige Verbindung die Fixierung mit dem Bildaufzeichnungsgerät sicher.

Eine weitere Variante der Erfindung sieht vor, dass das Objektivbajonett über ein Ge-winde mit einem Durchmesser von 42 mm und einer Steigung von 0,75 mm mit dem Gehäuse lösbar verbindbar ist. Dadurch wird sichergestellt, dass unterschiedliche Ob-jektivbajonette für unterschiedliche Bildaufzeichnungsgeräte mit dem Gehäuse verbun-den werden können und so das Objektiv mit unterschiedlichsten Bildaufzeichnungsgeräten verbindbar ist.

Gemäß einer weiteren vorteilhaften Ausführungsform ist die Austrittspupille des fernoptischen Gerätes zwischen einer Zerstreuungslinse und einer Sammellinse im Objektiv angeordnet. Dies führt zu einer optimalen Abbildungsqualität auf der Bildaufzeich-nungsfläche.

In einer weiteren, sehr vorteilhaften Weiterbildung ist auch die Eintrittspupille des Objek-tivs zwischen der Zerstreuungslinse und der Sammellinse angeordnet. Dadurch kann sichergestellt werden, dass das vom fernoptischen Gerät zur Verfügung gestellte Sehfeld in voller Größe auf die Bildaufzeichnungsfläche abgebildet wird bei höchster Bildqualität und höchster Intensität bzw. Bildhelligkeit.

In einer weiteren, vorteilhaften Variante der Erfindung sind am Gehäuse eine Zentriervorrichtung und eine Längspositioniervorrichtung angeordnet. Durch diese beiden Vorrichtungen ist eine optimale Ausrichtung des Objektivs gegenüber der optischen Achse des fernoptischen Gerätes möglich. Durch die Längspositioniervorrichtung wird eine optimale Intensitätsausbeutung gewährleistet.

Die erfindungsgemäße Lösung erlaubt es auf besondere, einfache Weise das Objektiv gegenüber der fernoptischen Einrichtung auszurichten, indem eine Stirnfläche des Ge-häuses als kreisringförmige Anschlagfläche ausgebildet ist. Dadurch kann eine optimale Ausrichtung gegenüber dem Okulargehäuse oder einer Schnittstelle mit einer korrespon-dierenden Anschlagfläche erzielt werden.

Eine besonders günstige Ausgestaltungsform der Vorrichtung kann erzielt werden, wenn das Gehäuse glockenförmig ausgebildet ist und einen kleinsten Außendurchmesser an einem dem Bildaufzeichnungsgerät zugewandten Endbereich aufweist. Durch diese Aus-führungsform kann eine optimale Lagerung des Gehäuses am Okulargehäuse oder an der Schnittstelle realisiert werden. Zusätzlich kann die Variabilität dadurch erhöht werden, da eine Verbindung mit unterschiedlichsten Okulargehäusen realisierbar ist. Gemeinsam mit der Fixiereinrichtung lässt sich eine stabile und nicht überbestimmte Verbindung zwischen dem Objektiv und dem fernoptischen Gerät herstellen.

In einer besonders vorteilhaften Ausführungsform der Erfindung ist am Gehäuse zu-mindest eine Schnittstelle zur elektronischen Datenübermittlung von und zu dem fern-optischen Gerät angeordnet. Durch die Anordnung einer solchen Schnittstelle zur elekt-ronischen Datenübermittlung können zum Beispiel Entfernungsmessdaten, Zoom- und/oder Fokussiereinstellungen vom fernoptischen Gerät an das Bildaufzeichnungsge-rät übertragen werden, genauso können aber auch Einstellungen oder Befehle vom Bildaufzeichnungsgerät an das fernoptische Gerät übertragen werden.

In einer weiteren Variante der Erfindung wird eine Objektivoptik durch die Zer- streuungslinse an der dem fernoptischen Gerät zugewandten Seite, durch ein Kittglied aus einer Zerstreuungs- und einer Sammellinse, an der dem Bildaufzeichnungsgerät zugewandten Seite und der dazwischen angeordneten Sammellinse gebildet. Diese Anordnung von unterschiedlichen, optischen Bauelementen zu einer Objektivoptik gewährleistet eine qualitativ hochwertige Abbildung des Bildes auf der Bildaufzeichnungsfläche des Bildaufzeichnungsgerätes.

Zum besseren Verständnis der Erfindung wird diese anhand der nachfolgenden Figuren näher erläutert.

Es zeigen jeweils in stark schematisch vereinfachter Darstellung:
- Fig. 1: eine Schnittdarstellung durch das Objektiv sowie einen teilweisen Schnitt durch die Bildaufzeichnungsvorrichtung in Draufsicht;
- Fig. 2: eine Darstellung des Strahlenverlaufs durch das Okular des fernoptischen Gerätes und der Objektivoptik des Objektivs;
- Fig. 3: einen Längsschnitt durch einen Teil eines Okulars einer fernoptischen Einrich-tung und durch eine Schnittstelle;
- Fig. 4: Längsschnitt durch ein erfindungsgemäßes Objektiv;
- Fig. 5: eine Darstellung des Strahlenverlaufs durch die Objektivoptik des Objektivs.

Einführend sei festgehalten, dass in den unterschiedlich beschriebenen Ausführungs-formen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeich-nungen übertragen werden können. Auch sind die in der Beschreibung gewählten Lage-angaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Anga-be 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

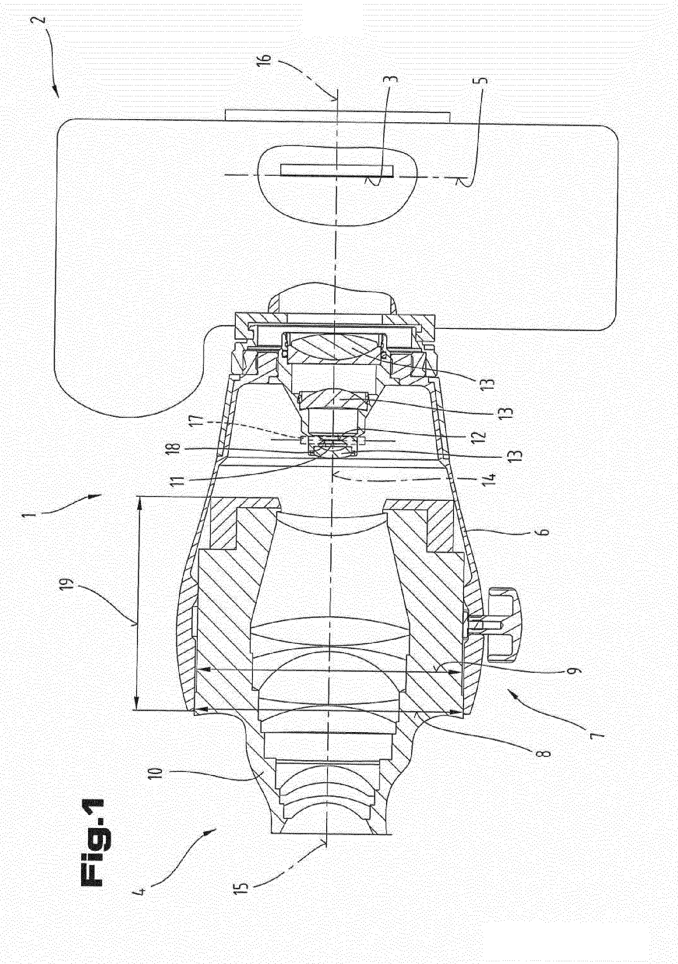

Fig. 1 zeigt ein erfindungsgemäßes Objektiv 1 in einer verbundenen Stellung mit einem Bildaufzeichnungsgerät 2. Das Bildaufzeichnungsgerät 2 kann beispiels- weise eine Foto- oder Filmkamera sein. Das Objektiv 1 ist ebenfalls in einer verbundenen Stellung mit ei-nem Okular 7 eines fernoptischen Gerätes 4 dargestellt. Ein durch das fernoptische Gerät 4 erzeugtes Bild 3 wird nach Durchtritt durch das Objektiv 1 auf einer Bildaufzeichnungs-fläche 5 erzeugt. Die Bildaufzeichnungsfläche kann zum Beispiel durch einen Fotofilm, einen optoelektronischen Sensor oder einen reinen sonstigen, optischen Sensor gebildet sein. Das Objektiv 1 weist ein Gehäuse 6 auf, welches sich über die dem fernoptischen Gerät 4 nächstliegende Linse 13 hinaus in Richtung des Okulars 7 des fernoptischen Gerä-tes 4 erstrecken kann. Das Gehäuse 6 weist einen größeren Innendurchmesser 8 als der Außendurchmesser 9 des Okulargehäuses 10 auf. Das Gehäuse 6 kann jedoch auch nur in einem Überlappungsbereich 19 einen größeren Innendurchmesser 8 aufweisen als der Außendurchmesser 9 des Okulargehäuses 10.

Eine Verbindung des Gehäuses 6 mit dem Okular 7 des fernoptischen Gerätes 4 ist lösbar ausgeführt und kann beispielsweise durch eine Fixiervorrichtung 21 realisiert sein. Sowohl eine Austrittspupille 11 des fernoptischen Gerätes 4, wie auch eine Eintrittspupille 12 des Objektivs 1 liegen innerhalb des Gehäuses 6 des Objektivs 1. Das Objektiv 1 weist zumindest eine Linse 13 auf. Es können aber auch eine Mehrzahl von Linsen 13 vorgese-hen werden. Die optische Achse 14 des Objektivs 1 ist parallel zur optischen Achse 15 des Okulars 7 des fernoptischen Gerätes 4 und parallel zur Mittelachse 16 des Okulargehäuses angeordnet. Bevorzugterweise können diese genannten Achsen 14, 15, 16 eine einzige, bevorzugt geradlinig verlaufende, Achse bilden. Beispielsweise kann eine geringfügige Schiefstellungen der optischen Achse 14 des Objektivs 1 kleiner 5° oder ein geringfügiger radialer Abstand zwischen den optischen Achsen kleiner 3 mm durch eine Objektivoptik 35 ausgeglichen sein.

Die Austrittspupille 11 des fernoptischen Gerätes 4 wie auch die Eintrittspupille 12 des Objektivs können auf einer einzigen Ebene in einem Bereich 17 des Gehäuses 6 liegen. Bevorzugterweise überdecken sich die Flächen der Austrittspupille 11 und die Ein-trittspupille 12 teilweise oder vollständig, vorteilhaft ist es auch wenn die Austrittspupille 11 und die Eintrittspupille 12 zentrisch zur optischen Achse 14 und in Längsrichtung der optischen Achse 14 an derselben Position an- geordnet sind.

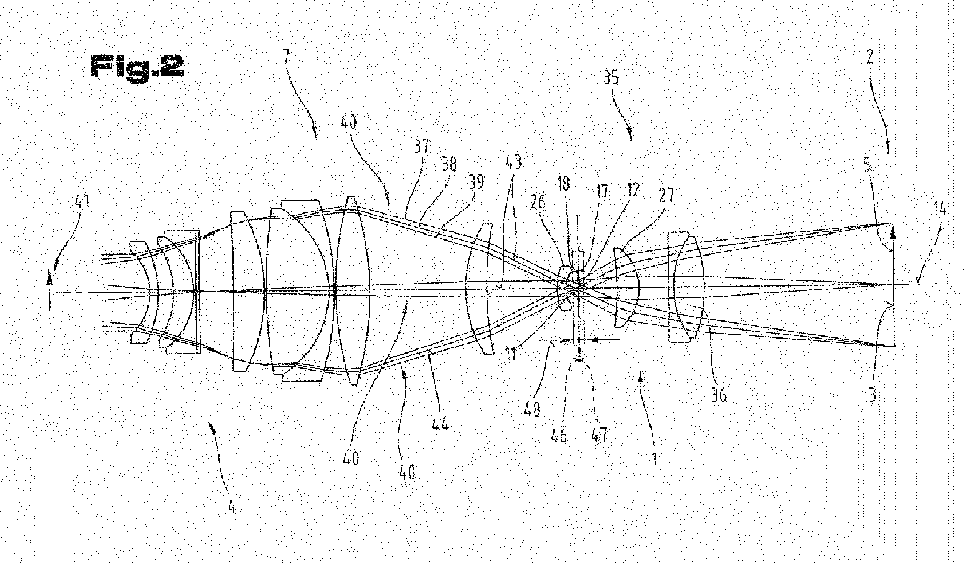

Fig. 2 zeigt einen möglichen Strahlenverlauf durch das Okular 7 des fernoptischen Gerä-tes 4 sowie durch das Objektiv 1 bis hin zur Bildaufzeichnungsfläche 5 des Bildaufzeichnungsgerätes 2. Beispielsweise kann in oder nahe einem Bereich 17, in dem auch die Austrittspupille 11 und die Eintrittspupille 12 liegen, eine Blende 18 angeordnet werden. Der Bereich 17 kann durch zwei senkrecht zu der optischen Achse 14 liegenden Ebenen 46, 47, welche einen Längsabstand 48 bezogen auf die optische Achse 14 kleiner 5 mm aufweisen können, begrenzt sein. Die Blende 18 kann beispielsweise durch eine Apertur-blende gebildet sein. Das Objektiv 1 weist eine feste Brennweite kleiner als 100 mm, be-vorzugt zwischen 40 und 30 mm auf. Vorteilhaft ist eine feste Brennweite von 30 mm zwischen der Objektivoptik 35 und der Bildaufzeichnungsfläche 5 des Bildaufzeich-nungsgerätes 2. Die Austrittspupille 11 des fernoptischen Gerätes 4 kann zwischen einer Zerstreuungslinse 26 und einer Sammellinse 27 angeordnet sein. Diese Linsen 26, 27 können Standardzerstreuungs- und - sammellinsen für fernoptische Anwendungen sein, die am Markt frei verfügbar sind. Darüber hinaus kann auch die Eintrittspupille 12 des Objektivs 1 zwischen der Zerstreuungslinse 27 und der Sammellinse 28 angeordnet sein.

Die Austrittspupille 11 und die Eintrittspupille 12 können einander zumindest teil- weise überlagern oder sind in Längsrichtung der optische Achse 14 des Objektivs 1 minimal zueinander distanziert, zum Beispiel 0,001 bis 5 mm, bevorzugter Weise 0,001 bis 1 mm. Die Objektivoptik 35 kann durch eine Zerstreuungslinse 26 an der dem fernoptischen Gerät zugewandten Seite, durch ein Kittglied 36, welches aus einer Zerstreuungs- und einer Sammellinse zusammengesetzt sein kann und an der dem Bildaufzeichnungsgerät 2 zugewandten Seite angeordnet ist und einer dazwischen angeordneten Sammellinse 27 gebildet werden. Die parallel in die Zerstreuungslinse 26 der Objektivoptik 35 eintreten-den Strahlen 37, 38, 39 eines Strahlenbündels 40 mit Randstrahlen 43,44 können im Be-reich 17 die Austrittspupille 11 und die Eintrittspupille 12 bilden. Randbereiche des Strahlenbündels 40 können wenn gewünscht beispielsweise durch die Blende 18 abge-schattet werden. Die Strahlen 37, 38, 39 des Strahlenbündel 40 können durch die Sam-mellinse 27 und das Kittglied 36, welches ebenso aus marktüblichen zusammengesetzten Zerstreuungs- und Sammellinsen gebildet werden kann, zur Bildaufzeichnungsebene 5 des Bildaufzeichnungsgerätes 2 gelenkt, wo ein reelles Bild 3 eines weit entfernten Ob-jektes 41 abgebildet werden kann. Die Austrittspupille 11 des fernoptischen Gerätes 4 kann zum Beispiel durch die Linse 13, welche die Zerstreuungslinse 26 sein kann, ver-ändert sein, insbesondere kann ihre Längsposition an der optischen Achse 15 dadurch verschoben sein und dadurch näher oder entfernter von der Bildaufzeichnungsfläche 5 liegen. Die Austrittspupille 11 des fernoptischen Gerätes 4 kann beispielsweise auch vor der Linse 13 oder der Objektivoptik 35, jedoch innerhalb des Gehäuses 6 liegen.

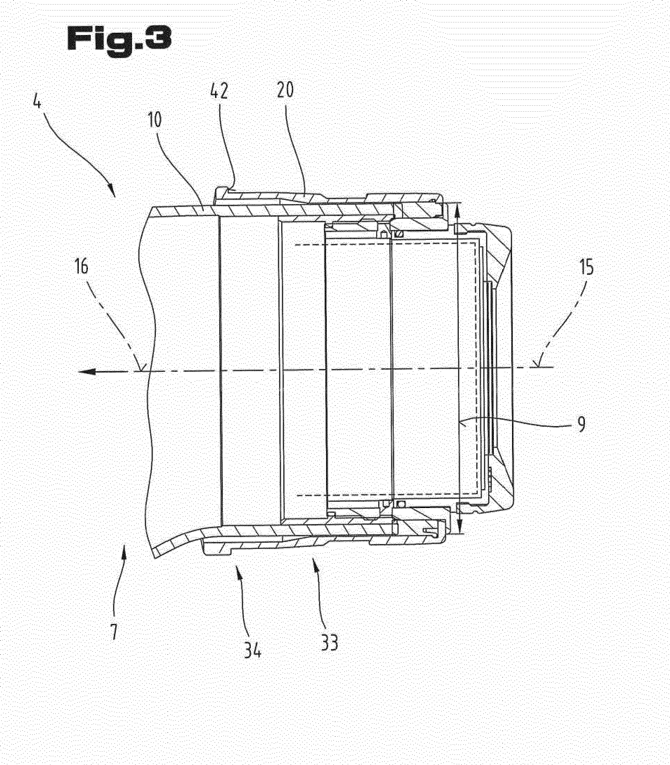

In Fig. 3 ist eine Schnittstelle 20 ersichtlich, mit der das Gehäuse 6 mit dem Okularge-häuse 10 lösbar verbindbar ist, mit dem fernoptischen Gerät 4 wieder lösbar verbunden werden kann. Die Anbindungen einer solchen Schnittstelle 20 können zum Beispiel eine Fixiervorrichtung 21, wie zum Beispiel über ein Gewinde, über eine Klemmeinrichtung, über einen Presssitz, über eine Klemmschraube oder eine Schnellspannvorrichtung er-folgen.

Die Schnittstelle 20 kann beispielsweise so an das Okulargehäuse 10 des Okulars 7 des fernoptischen Gerätes 4 angebunden werden, dass eine optimale Zentrierung des Gehäuses 6 des Objektivs 1 ermöglicht werden kann. Die Schnittstelle 20 kann insbesondere so aus-gelegt sein, dass sie mit mehreren verschiedenen Okulargehäusetypen verbunden werden kann. Die Schnittstelle 20 kann über Vorrichtungen verfügen, die insbesondere mit einer Zentriervorrichtung 33 und einer Längspositioniervorrichtung 34 am Gehäuse 6 zusam-menwirken. Die Schnittstelle 20 kann zum Beispiel so ausgeführt sein, dass eine, einer kreisringförmigen Anschlagfläche 29 des Gehäuses 6 korrespondierende Anschlagfläche 42 angeordnet ist.

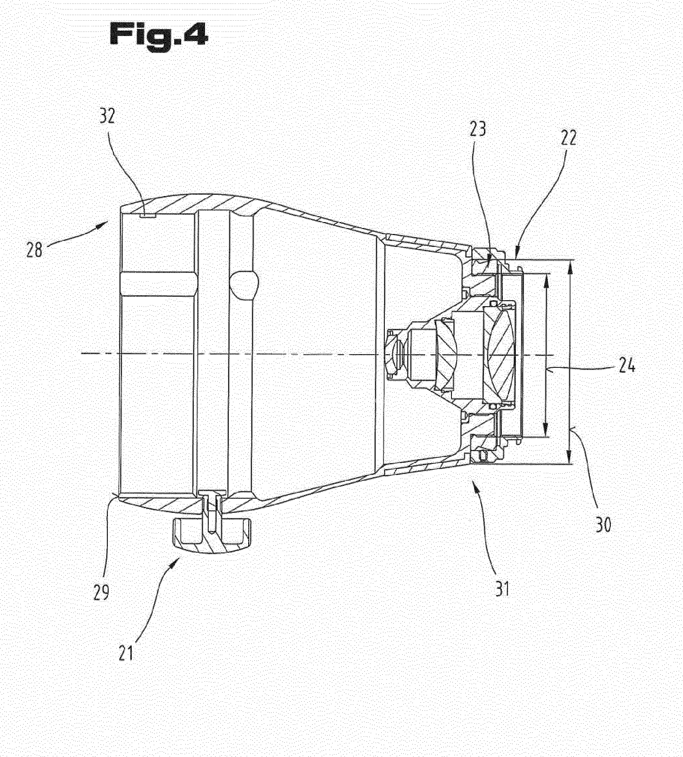

Fig. 4 zeigt einen Längsschnitt durch das Objektiv 1. Das Objektiv 1 kann beispielsweise durch ein Objektivbajonett 22 mit dem Bildaufzeichnungsgerät lösbar verbunden wer-den. Ein solches Objektivbajonett 22 kann über ein Gewinde 23, welches bevorzugter Weise einen Durchmesser 24 von 42 mm und eine Steigung 25 von 0,75 mm aufweist, mit dem Gehäuse lösbar verbindbar sein. Grundsätzlich sind natürlich auch andere aus dem Stand der Technik bekannte Vorrichtungen geeignet, um das Objektivbajonett mit dem Gehäuse lösbar zu verbinden. Hierbei kann an klemm-, rast- oder rein formschlüssige Verbindungen gedacht werden.

Das Objektiv kann an seinem Gehäuse 6 mit eine Zentriervorrichtung 33 und/oder eine Längspositioniervorrichtung 34 und/oder Fixiervorrichtung 21 versehen sein, welche auch mit entsprechenden Gegenstücken am Okulargehäuse 10 oder an der Schnittstelle 20 zusam-menwirken können.

Das Gehäuse 6 kann an seiner Stirnfläche 28 eine kreisringförmige Anschlagfläche 29 aufweisen, mit der beispielsweise eine Ausrichtung gegenüber dem Okulargehäuse 10 oder der Schnittstelle 20 erfolgen kann.

Das Gehäuse 6 kann darüber hinaus glockenförmig ausgebildet sein und seinen kleinsten Außendurchmesser 30 an einem dem Bildaufzeichnungsgerät 2 zuge- wandten Endbe-reich 31 aufweisen. Am Gehäuse 6 kann zumindest eine Schnitt- stelle zur elektronischen Datenübermittlung 32 von und zu dem fernoptischen Gerät 4 und/oder Bildaufzeich-nungsgerät 2 angeordnet sein.

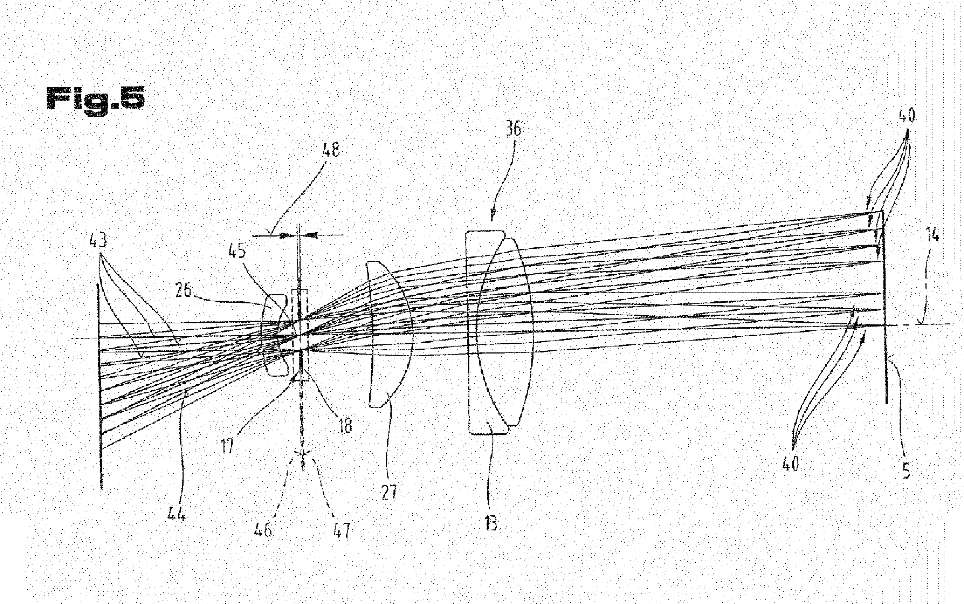

Fig. 5 zeigt einen beispielhaften Strahlenverlauf durch die Objektivoptik 35. Zumindest ein Schnittpunkt 45 von Schwerstrahlen 43, 44 zumindest von zwei Strahlenbündeln 40 kann innerhalb des Gehäuses 6 liegen. Natürlich können beispielsweise auch eine Vielzahl von Schnittpunkten 45 von Schwerstrahlen 43, 44 von einer Vielzahl von Strahlenbündeln innerhalb des Gehäuses 6 liegen. Das Objektiv (1) kann zumindest eine Linse 13 mit einer optischen Achse 14 umfassen. Der oder die Schnittpunkt(e) 45 können auf einer der Bildaufzeichnungsfläche 5 gegenüberliegenden Seite der der Bildaufzeichnungsfläche 5 nächstliegenden Linse 13 angeordnet sein. Die Objektivoptik 35 kann durch eine Zer-streuungslinse 26 an der dem fernoptischen Gerät zugewandten Seite, durch ein Kittglied 36, welches aus einer Zerstreuungs- und einer Sammellinse zusammengesetzt sein kann und an der dem Bildaufzeichnungsgerät 2 zugewandten Seite angeordnet ist und einer dazwischen angeordneten Sammellinse 27 gebildet werden. Beispielsweise können der oder die Schnittpunkt(e) 45 zwischen der Zerstreuungslinse 26 und der Sammellinse 27 angeordnet sein.

Der oder die Schnittpunkt(e) 45 der Schwerstrahlen 43, 44 zumindest von zwei Strahlenbündeln 40 können in einer beispielhaften Variante innerhalb des Gehäuses 6 in einem Bereich 17 liegen, der durch zwei senkrecht zu der optischen Achse 14 liegenden Ebenen 46, 47, welche einen Längsabstand 48 bezogen auf die optische Achse 14 klei-ner 5 mm aufweisen können, begrenzt sein kann.

Eine Blende 18 kann zumindest teilweise in diesen Bereich 17 angeordnet sein.

Die Ausführungsbeispiele zeigen mögliche Ausführungsvarianten der erfindungs- ge-mäßen Vorrichtung bzw. des erfindungsgemäßen Adapters, wobei an dieser Stelle be-merkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit auf-grund der Lehre zum technischen Handeln durch gegenständliche Erfindung im Können des auf diesem technischen Gebiet tätigen Fachmannes liegt.

Der Ordnung halber sei abschließend darauf hingewiesen, dass zum besseren Verständ-nis des Aufbaus der erfindungsgemäßen Vorrichtung bzw. des erfindungsgemäßen Adapters diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Objektiv | 36 | Kittglied |
| 2 | Bildaufzeichnungsgerät | 37 | Strahl |
| 3 | Bild | 38 | Strahl |
| 4 | fernoptisches Gerät | 39 | Strahl |
| 5 | Bildaufzeichnungsfläche | 40 | Strahlenbündel |
| | | | |
| 6 | Gehäuse | 41 | Objekt |
| 7 | Okular | 42 | Anschlagfläche |
| 8 | Innendurchmesser | 43 | Randstrahl |
| 9 | Außendurchmesser | 44 | Randstrahl |
| 10 | Okulargehäuse | 45 | Schnittpunkt |
| | | | |
| 11 | Austrittspupille | 46 | Ebene |
| 12 | Eintrittspupille | 47 | Ebene |
| 13 | Linse | 48 | Längsabstand |
| 14 | optische Achse | | |
| 15 | optische Achse | | |
| | | | |
| 16 | Mittelachse | | |
| 17 | Bereich | | |
| 18 | Blende | | |
| 19 | Überlappungsbereich | | |
| 20 | Schnittstelle | | |
| | | | |
| 21 | Fixiervorrichtung | | |
| 22 | Objektivbajonett | | |
| 23 | Gewinde | | |
| 24 | Durchmesser | | |
| 25 | Steigung | | |
| | | | |
| 26 | Zerstreuungslinse | | |
| 27 | Sammellinse | | |
| 28 | Stirnfläche | | |
| 29 | Anschlagfläche | | |
| 30 | Außendurchmesser | | |
| | | | |
| 31 | Endbereich | | |
| 32 | Schnittstelle | | |
| 33 | Zentriervorrichtung | | |
| 34 | Längspositioniervorrichtung | | |
| 35 | Objektivoptik | | |

## Patentansprüche

1. Objektiv (1) für ein Bildaufzeichnungsgerät (2) zur Abbildung eines Bildes (3), welches durch ein fernoptisches Gerätes (4) erzeugt wird, auf einer Bildaufzeichnungsfläche (5), **dadurch gekennzeichnet, dass** ein Gehäuse (6) welches mit einem Okular (7) des fernoptischen Gerätes (4) lösbar verbindbar ist, einen größeren Innendurchmesser (8) aufweist als der Außendurchmesser (9) eines Okulargehäuses (10) und sowohl eine Austrittspupille (11) des fernoptischen Gerätes (4) und wie auch eine Eintrittspupille (12) des Objektivs (1) innerhalb des Gehäuses (6) liegen und das Objektiv (1) zumindest eine Linse (13) aufweist, deren optische Achse (14) parallel zur optischen Achse (15) des Okulars (7) des fernoptischen Gerätes (4) und zur Mittelachse (16) des Okulargehäuses (10) angeordnet ist.

2. Objektiv (1) für ein Bildaufzeichnungsgerät (2) zur Abbildung eines Bildes (3), welches durch ein fernoptisches Gerätes (4) erzeugt wird, auf einer Bildaufzeichnungsfläche (5), **dadurch gekennzeichnet, dass** ein Gehäuse (6) welches mit einem Okular (7) des fernoptischen Gerätes (4) lösbar verbindbar ist, einen größeren Innendurchmesser (8) aufweist als der Außendurchmesser (9) eines Okulargehäuses (10) und zumindest ein Schnittpunkt (45) von Schwerstrahlen (43,44) zumindest von zwei Strahlenbündeln (40,...) innerhalb des Gehäuses (6) liegt und das Objektiv (1) zumindest eine Linse (13) aufweist, deren optische Achse (14) parallel zur optischen Achse (15) des Okulars (7) des fernoptischen Gerätes (4) und zur Mittelachse (16) des Okulargehäuses (10) angeordnet ist und der Schnittpunkt (45) auf einer der Bildaufzeichnungsfläche (5) gegenüberliegenden Seite der der Bildaufzeichnungsfläche (5) nächstliegenden Linse (13) angeordnet ist.

3. Objektiv (1) nach Anspruch 1 oder 2, **dadurch gekennzeichnet, dass** sowohl die Austrittspupille (11) des fernoptischen Gerätes (4) wie auch die Ein- trittspupille (12) des Objektivs (1) oder der Schnittpunkt (45) der Schwerstrahlen (43, 44) zumindest von zwei Strahlenbündeln (40,...) innerhalb des Gehäuses (6) in einem Bereich (17) liegt der durch zwei senkrecht zu der optischen Achse (14) liegenden Ebenen, welche einen Längsabstand bezogen auf die optische Achse (14) kleiner 5 mm aufweisen, begrenzt ist.

4. Objektiv (1) nach Anspruch 1 oder 2, **dadurch gekennzeichnet, dass** eine Blende (18) im Bereich (17) angeordnet ist.

5. Objektiv (1) nach einem der Ansprüche 1 bis 4, **dadurch gekennzeichnet, dass** das Objektiv (1) eine feste Brennweite kleiner als 100 mm, bevorzugt zwischen 40 und 20 mm aufweist.

6. Objektiv (1) nach einem der Ansprüche 1 bis 4, **dadurch gekennzeichnet, dass** das Objektiv (1) eine feste Brennweite von 30 mm aufweist.

7. Objektiv (1) nach einem der Ansprüche 1 bis 6, **dadurch gekennzeichnet, dass** das Gehäuse (6) zumindest in einem Überlappungsbereich (19) einen größeren Innendurchmesser (8) aufweist als der Außendurchmesser (9) des Okulargehäuses (10).

8. Objektiv (1) nach einem der Ansprüche 1 bis 7, **dadurch gekennzeichnet, dass** das Gehäuse (6) über eine Schnittstelle (20), welche mit dem Okulargehäuse (10) lösbar verbindbar ist, mit dem fernoptischen Gerät (4) lösbar verbindbar ist.

9. Objektiv (1) nach einem der Ansprüche 1 bis 8, **dadurch gekennzeichnet, dass** das Gehäuse (6) über eine Fixiervorrichtung (21), mit dem fernoptischen Gerät (4) oder der Schnittstelle (20) lösbar verbindbar ist.

10. Objektiv (1) nach einem der Ansprüche 1 bis 9, **dadurch gekennzeichnet, dass** das Objektiv (1) über ein Objektivbajonett (22) mit dem Bildaufzeichnungsgerät (2) lösbar verbindbar ist.

11. Objektiv (1) nach Anspruch 10, **dadurch gekennzeichnet, dass** das Objektivbajonett (22) über ein Gewinde (23) mit einem Durchmesser (24) von 42 mm und einer Steigung (25) von 0,75 mm mit dem Gehäuse (6) lösbar verbindbar ist.

12. Objektiv (1) nach einem der Ansprüche 1 bis 11, **dadurch gekennzeichnet, dass** die Austrittspupille (11) des fernoptischen Gerätes (4) zwischen einer Zerstreuungslinse (26) und einer Sammellinse (27) angeordnet ist.

13. Objektiv (1) nach Anspruch 12, **dadurch gekennzeichnet, dass** auch die Eintrittspupille (12) des Objektivs (1) zwischen der Zerstreuungslinse (27) und der Sammellinse (28) angeordnet ist.

14. Objektiv (1) nach einem der Ansprüche 1 bis 13, **dadurch gekennzeichnet, dass** am Gehäuse (6) eine Zentriervorrichtung (33) und eine Längspositioniervorrichtung (34) angeordnet sind.

15. Objektiv (1) nach einem der Ansprüche 1 bis 14, **dadurch gekennzeichnet, dass** eine Stirnfläche (28) des Gehäuses (6) als eine kreisringförmige Anschlagfläche (29) ausgebildet ist.

16. Objektiv (1) nach einem der Ansprüche 1 bis 15, **dadurch gekennzeichnet, dass** das Gehäuses (6) glockenförmig ausgebildet ist und einen kleinsten Außendurchmesser (30) an einem dem Bildaufzeichnungsgerät (2) zugewandten Endbereich (31) aufweist.

17. Objektiv (1) nach einem der Ansprüche 1 bis 16, **dadurch gekennzeichnet, dass** am Gehäuses (6) zumindest eine Schnittstelle (32) zur elektronischen Datenübermittlung von und zu dem fernoptischen Gerätes (4) angeordnet ist.

18. Objektiv (1) nach einem der Ansprüche 1 bis 17, **dadurch gekennzeichnet, dass** eine Objektivoptik (35) durch die Zerstreuungslinse (26) an der dem fernoptischen Gerät (4) zugewandten Seite, durch ein Kittglied (36), aus einer Zerstreuungs- und einer Sammellinse, an der dem Bildaufzeichnungsgerät (2) zu- gewandten Seite und der dazwischen angeordneten Sammellinse (27) gebildet ist.
